# EUROPÄISCHE PATENTANMELDUNG

(11) **EP 0 822 112 A2**
(43) Veröffentlichungstag der Anmeldung: **04.02.1998**
(21) Anmeldenummer: 97110962.4
(22) Anmeldetag: 02.07.1997
(51) Int. Cl.: B60K 26/02, B60K 23/02

(54) **Fahrpedaleinheit**

(30) Priorität: 02.08.1996 DE 19631212
(71) Anmelder: Daimler-Benz Aktiengesellschaft, 70546 Stuttgart (DE)
(72) Erfinder: Müller, Martin, 73770 Denkendorf (DE)

(57) **Zusammenfassung**

Eine Fahrpedaleinheit, insbesondere mit einem Kupplungs- (1) und einem Bremspedal (2), weist einen Lagerbock (3) auf, der an einer Zwischenwand zwischen einem Fahrgastraum und einem Fahrzeugvorbau, insbesondere einem Motorraum, befestigbar ist. Der Lagerbock weist eine derartige Höhe auf oder ist mit einem Verlängerungsteil (30) derart versehen, daß er an einem Querträger (7) befestigbar ist, der zwischen Fahrzeugvorbau und Fahrgastraum angeordnet und als stabiles, kräfteaufnehmendes Teil ausgebildet ist. Der Lagerbock (3) oder ein am Lagerbock angeordnetes Teil ist mit einem Anschlagteil (6) versehen. Dabei ist die Höhe des Anschlagteiles so gewählt, daß sich das Anschlagteil im montierten Zustand vom Fahrer aus gesehen vor dem Querträger befindet.

## Beschreibung

Die Erfindung betrifft eine Fahrpedaleinheit nach der im Oberbegriff des Anspruchs 1 näher definierten Art.

Aus der EP 0 430 600 A1 ist eine Fahrpedaleinheit mit mindestens einem Pedal und einem damit verbundenen Pedalhebel bekannt. Aufgabe dieser Fahrpedaleinheit ist eine Erleichterung der Montage, was durch verschiedene Kunststoffgußteile, darunter auch das Gehäuse und die Pedale, erreicht wird. Das Gehäuse wird zusammen mit den Pedalen zu einer Baueinheit vormontiert und an einem im Fahrzeug vorhandenen Bauelement befestigt.

Weiterhin ist in der WO 94/29584 A1 eine Fahrpedaleinheit beschrieben, deren Ziel eine Vermeidung von direkter mechanischer Verbindung zwischen Pedal und Antrieb ist. Dies wird durch die Verbindung von einfachen mechanischen Teilen mit einem Lagesensor erreicht.

Nachteilig bei den aus diesen Schriften bekannten Fahrpedaleinheiten ist jedoch, daß diese Fahrpedaleinheiten im Crash-Fall weit in den Fußraum des Fahrers eindringen, weil das Bremsgerät und die daran angebrachte Betätigungsstange die durch den Crash entstehenden Kräfte auf die Pedale übertragen und sich diese aufgrund des Angriffspunktes der Betätigungsstange und der Lagerung bzw. Befestigung des Lagerbocks um ihre Befestigungspunkte in Richtung des Fußraumes drehen können. Dies kann zu schweren Verletzungen, vor allem der Beine des Fahrers, führen.

Der vorliegenden Erfindung liegt daher die Aufgabe zugrunde, eine Fahrpedaleinheit zu schaffen, die so konstruiert ist, daß im Crash-Fall ein Fahrer nicht der Gefährdung der Verletzung durch diese Fahrpedaleinheit ausgesetzt ist.

Erfindungsgemäß wird diese Aufgabe durch die im kennzeichnenden Teil des Anspruchs 1 genannten Merkmale gelöst.

Durch die Höhe bzw. Verlängerung des Lagerbocks hin zu einem entsprechend stabilen Querträger und eine Befestigung des Lagerbocks an dem Querträger sowie durch das Anbringen eines Anschlagteiles wird eine Fahrpedaleinheit geschaffen, bei der ein Eindrehen der Pedale im Crash-Fall vermieden wird. Statt der üblichen Befestigung an einer dünnwandigen Zwischenwand ist der Lagerbock nämlich erfindungsgemäß an einem im Fahrzeug vorhandenen stabilen Querträger angebracht. Hierfür kann z.B. der Querträger verwendet werden, der sich im allgemeinen unter der Windschutzscheibe befindet. Dadurch wird ein Eindrehen der Pedale in den Fußraum wirkungsvoll vermieden.

Vorteilhafte Ausgestaltung und Weiterbildungen der Erfindung ergeben sich aus den Unteransprüchen und aus dem nachfolgend anhand der Zeichnung prinzipmäßig beschriebenen Ausführungsbeispiel.

Es zeigt:
- Fig. 1: eine erfindungsgemäße Fahrpedaleinheit in der Seitenansicht; und
- Fig. 2: die Fahrpedaleinheit in einer Projektionsansicht.

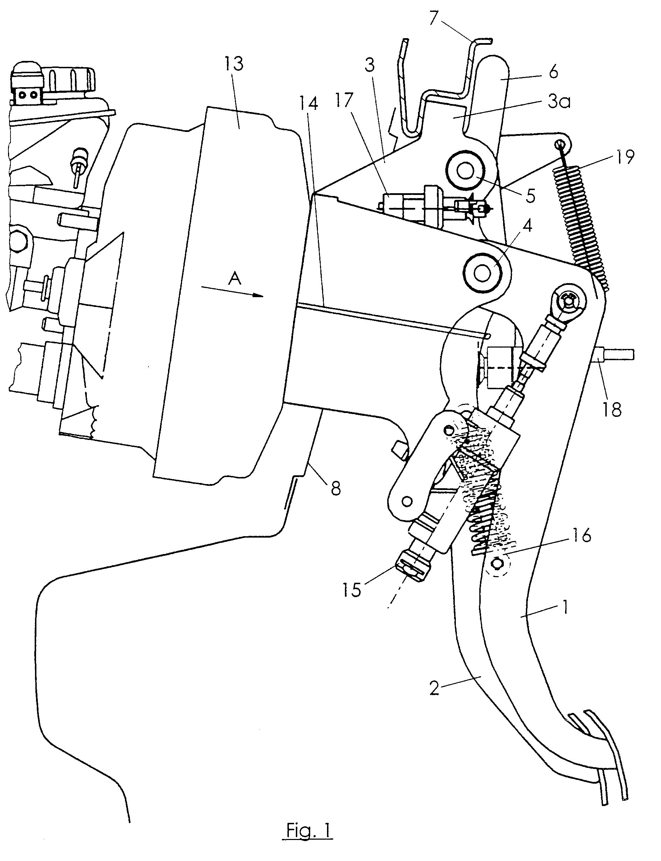

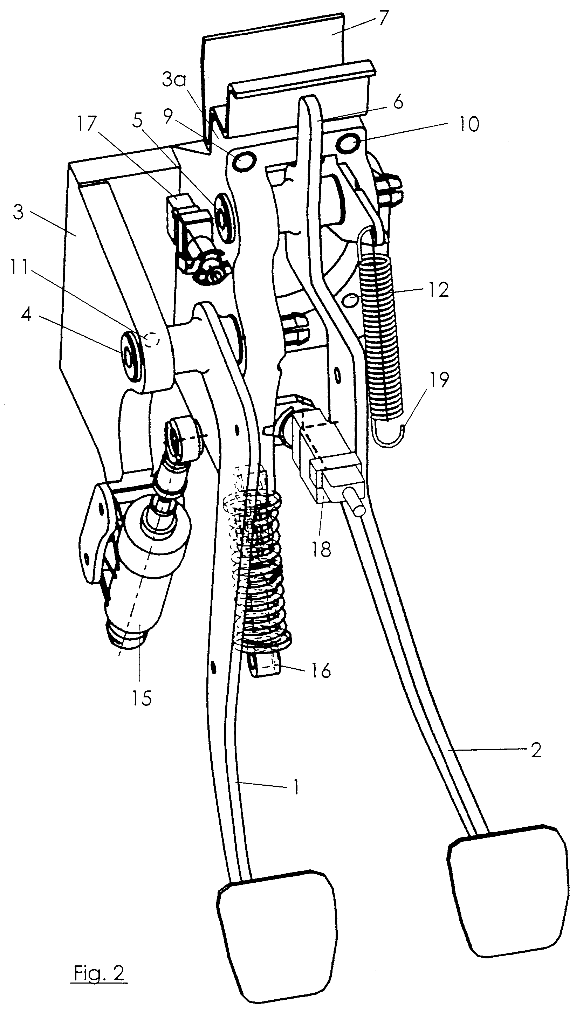

Gemäß Fig. 1 und Fig. 2 sind ein Kupplungspedal 1 und ein Bremspedal 2 an einem Lagerbock 3 angebracht. Dies wird durch Bolzen 4 und 5, welche vorzugsweise aus Kunststoff ausgebildet sind, realisiert. Dabei ist der Bolzen 4 durch eine Bohrung im Lagerbock 3 und durch eine Bohrung im Kupplungspedal 1 durchgesteckt, der Bolzen 5 ist durch eine andere Bohrung im Lagerbock 3 und durch eine Bohrung im Bremspedal 2 durchgesteckt.

Am oberen Ende des Bremspedals 2 befindet sich in dessen Verlängerung als Ansatz ein Anschlagteil 6. Dieses Anschlagteil 6 ist so ausgebildet, daß es sich im montierten Zustand vom Fahrer aus gesehen direkt vor einem im Fahrzeug vorhandenen Querträger 7 befindet. Der Querträger 7 kann sich z.B. unter einer nicht dargestellten Windschutzscheibe befinden. Der Lagerbock 3 weist auf seiner Oberseite ein Verlängerungsteil 3a auf und ist an dem Querträger 7 sowie an einer Zwischenwand 8 angebracht. Zur Anbringung des Lagerbocks 3 am Querträger 7 befinden sich im Lagerbock 3 bzw. in dem Verlängerungsteil 3a Bohrungen 9 und 10. Zur Anbringung des Lagerbocks 3 an der Zwischenwand 8 sind Bohrungen 11 und 12 vorgesehen. Die Bohrungen 9 bis 12 fluchten mit nicht dargestellten Bohrungen im Querträger 7 und in der Zwischenwand 8. Die zur sachgemäßen Anbringung notwendigen Verbindungseinrichtungen, wie z.B. Schrauben, sind ebenfalls nicht dargestellt.

Vom Fahrer aus betrachtet hinter dem Lagerbock 3 befindet sich ein Bremsgerät 13, welches durch eine Betätigungsstange 14 mit dem Bremspedal 2 verbunden ist.

Zur Ermöglichung der Kupplungsbetätigung ist in bekannter Weise zwischen dem Lagerbock 3 und dem Kupplungspedal 1 ein Hydraulikzylinder 15 angebracht. Ein Federelement 16, welches ebenfalls zwischen dem Lagerbock 3 und dem Kupplungspedal 1 angebracht ist, dient der Unterstützung der Kupplungsbetätigung. Des weiteren befindet sich am Lagerbock 3 noch ein ebenfalls bekannter Kupplungsschalter 17.

Das Bremspedal 2 ist in bekannter Weise mit einem Bremslichtschalter 18 und einer Rückholfeder 19 ausgestattet.

Im folgenden wird nun das Verhalten der Fahrpedaleinheit im Crash-Fall beschrieben:

Im Crash-Fall wird das Bremsgerät 13 in Richtung des Pfeiles A beschleunigt. Dadurch erfährt auch die Betätigungsstange 14 eine entsprechende Beschleunigung. Die dadurch entstehende Bewegung in Pfeilrichtung A wird durch die Betätigungsstange 14 auf die Pedale 1,2 übertragen, wodurch die Pedale 1,2 in Richtung Fahrer bewegt werden. Aufgrund der Befestigung der Pedale 1,2 durch die Bolzen 4,5 wäre diese Bewegung beim Stand der Technik eine Drehbewegung der Pedale 1,2.

Durch die Anbringung des Anschlagteiles 6 an dem Bremspedal 2 wird diese Drehbewegung jedoch verhindert, weil das Anschlagteil 6 an dem Querträger 7 unmittelbar bei Beginn einer Drehbewegung anschlägt. Die Bolzen 4 und 5 sind so ausgebildet, daß sie bei Überschreiten einer vorgewählten Kraft bzw. Belastung nach Anschlagen des Anschlagteiles 6 am Querträger 7 brechen, wodurch die mit Hilfe dieser Bolzen 4 und 5 befestigten Pedale 1 und 2 freigegeben werden. Dies ist z.B. durch eine Ausbildung der Bolzen 4 und 5 aus Kunststoff möglich. Dadurch können die Pedale 1 und 2 die Kraft, die von der Betätigungsstange 14 auf sie ausgeübt wird, nicht an den Fahrer weitergeben. Vielmehr fallen sie aufgrund der Schwerkraft nach unten weg.

Ein ungehindertes Eindringen des Lagerbocks 3 in den Fußraum wird weiterhin dadurch verhindert, daß der Lagerbock neben der üblichen Befestigung an der Zwischenwand 8 auch am Querträger 7 befestigt ist. Dieser Querträger 7 ist weitaus starrer ausgebildet als die Zwischenwand 8. Dadurch wird der Lagerbock 3 im Crash-Fall am Querträger 7 festgehalten.

Durch die beschriebenen Maßnahmen wird somit ein Eindringen der Fahrpedaleinheit in den Fußraum eines Kraftfahrzeuges und damit verbundene Verletzungen des Fahrers wirkungsvoll verhindert.

## Patentansprüche

1. Fahrpedaleinheit, insbesondere mit einem Kupplungs- und einem Bremspedal, mit einem Lagerbock, der an einer Zwischenwand zwischen einem Fahrgastraum und einem Fahrzeugvorbau, insbesondere einem Motorraum, befestigbar ist,
**dadurch gekennzeichnet**, daß der Lagerbock (3) eine derartige Höhe aufweist oder mit einem Verlängerungsteil (3a) derart versehen ist, daß er an einem Querträger (7) befestigbar ist, der zwischen Fahrzeugvorbau und Fahrgastraum angeordnet und als stabiles, kräfteaufnehmendes Teil ausgebildet ist, und daß der Lagerbock (3) oder ein am Lagerbock (3) angeordnetes Teil mit einem Anschlagteil (6) versehen ist, wobei die Höhe des Anschlagteiles (6) so gewählt ist, daß sich das Anschlagteil (6) im montierten Zustand vom Fahrer aus gesehen vor dem Querträger (7) befindet.

2. Fahrpedaleinheit nach Anspruch 1,
**dadurch gekennzeichnet,** daß das Anschlagteil (6) an einem Pedal (2) angeordnet ist.

3. Fahrpedaleinheit nach Anspruch 1 oder 2,
**dadurch gekennzeichnet,** daß die Pedale (1,2) jeweils mit Bolzen (4,5) derart am Lagerbock (3) angebracht sind, daß die Bolzen (4,5) bei Überschreiten einer vorgewählten Kraft brechen und dabei die Pedale (1,2) freigeben.

4. Fahrpedaleinheit nach Anspruch 3,
**dadurch gekennzeichnet,** daß die Bolzen (4,5) aus Kunststoff ausgebildet sind.
